Europäisches Patentamt

European Patent Office

Office européen des brevets

(19)

(11) Numéro de publication: **0 293 967 B1**

## (12) FASCICULE DE BREVET EUROPEEN

(45) Date de publication de fascicule du brevet: **09.09.92** (51) Int. Cl.5: **G02B 26/10**, G02B 5/08

(21) Numéro de dépôt: **88200997.0**

(22) Date de dépôt: **18.05.88**

(54) **Système d'analyse optico-mécanique n'utilisant qu'un seul polygone tournant.**

(30) Priorité: **22.05.87 FR 8707219**

(43) Date de publication de la demande:
**07.12.88 Bulletin 88/49**

(45) Mention de la délivrance du brevet:
**09.09.92 Bulletin 92/37**

(84) Etats contractants désignés:
**BE DE FR GB IT NL SE**

(56) Documents cités:
**DE-A- 2 855 830**
**US-A- 4 268 110**

(73) Titulaire: **TELECOMMUNICATIONS RADIOE-
LECTRIOUES ET TELEPHONIOUES T.R.T.
88, rue Brillat Savarin
F-75013 Paris(FR)**

(84) Etats contractants désignés:
**FR**

(73) Titulaire: **N.V. Philips' Gloeilampenfabrieken
Groenewoudseweg 1
NL-5621 BA Eindhoven(NL)**

(84) Etats contractants désignés:
**BE DE GB IT NL SE**

(72) Inventeur: **Loy, Fernand
SOCIETE CIVILE S.P.I.D. 156, boulevard Haussmann
F-75008 Paris(FR)**

(74) Mandataire: **Chaffraix, Jean et al
Société Civile S.P.I.D. 156, Boulevard Haussmann
F-75008 Paris(FR)**

**Description**

L'invention concerne un analyseur optico-mécanique n'utilisant qu'une seule pièce en rotation constituée par un polygone comportant n faces réfléchissantes.

On connaît des systèmes d'analyse (voir par exemple DE-A-2 855 830) qui utilisent un seul polygone tournant dont les n faces réfléchissantes sont différemment inclinées par rapport à l'axe de rotation de façon à balayer le champ à analyser par n bandes jointives de p lignes, p étant le nombre de détecteurs utilisés en parallèle. Le nombre total de lignes balayées dans le champ est ainsi np.

Des polygones de ce type doivent être fabriqués à l'unité en contrôlant avec une grande précision les inclinaisons des différentes faces réfléchissantes. La largeur angulaire d'une bande détermine le pas angulaire des différentes faces et toute erreur sur ce pas se traduit par des bandes non jointives. La réalisation de ce polygone s'avère donc difficile et onéreuse.

Le système d'analyse selon l'invention réalise le même type de balayage mais au moyen d'un polygone d'un type différent, de réalisation plus aisée et qui présente les avantages suivants :
- possibilité d'usiner simultanément plusieurs polygones,
- utilisation d'un même polygone avec des largeurs de bandes différentes,
- distance réglable entre les différentes bandes.

A cet effet, l'invention est remarquable en ce que lesdites faces réfléchissantes sont disposées parallèlement à l'axe du cylindre dans lequel le polygone a été taillé et déterminées de telle façon que leur répartition sur la périphérie soit sinusoïdale, ledit polygone tournant autour d'un axe faisant un certain angle $\theta$ avec l'axe dudit cylindre et étant calé par rapport audit axe de rotation de telle façon que ce dernier se trouve dans le plan formé par l'axe dudit cylindre et le diamètre de ce cylindre de part et d'autre duquel on a réparti les faces réfléchissantes parallèles deux à deux, les n faces du polygone ainsi disposé ayant n inclinaisons différentes par rapport à l'axe de rotation et le pas angulaire étant constant et par suite les bandes d'analyse équidistantes.

On peut ainsi en faisant varier l'angle $\theta$, modifier le pas angulaire et donc la largeur des bandes d'analyse et ajuster très correctement la juxtaposition de ces bandes.

La description suivante en regard des dessins annexés, le tout donné à titre d'exemple, fera bien comprendre comment l'invention peut être réalisée.

La figure 1 montre la répartition des faces sur la périphérie du cylindre dans lequel est taillé le polygone de l'invention.

La figure 2 montre la disposition de l'analyseur conformément à l'invention.

Les figures 3 et 4 montrent la variation du champ analysé lorsqu'on fait varier l'angle $\theta$ dans le rapport 1/2.

La figure 5 montre le champ de vue du système correspondant au balayage du polygone dans le sens vertical.

La figure 6 représente le schéma d'un mode de réalisation pratique de l'analyseur.

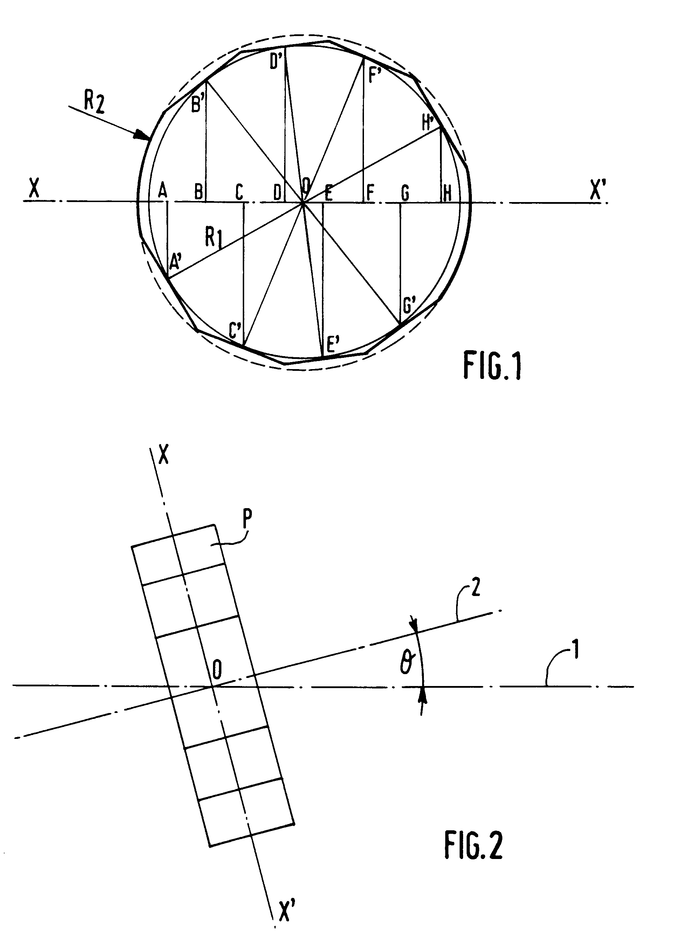

La taille du polygone est effectuée sur un cylindre de rayon $R_2$. Une coupe de ce cylindre suivant un plan perpendiculaire à son axe est représenté sur la figure 1.

Dans l'exemple choisi, le polygone a 8 faces de façon à analyser 8 bandes.

La répétition des faces est déterminée de la façon suivante :
On trace sur le diamètre $XX'$ des points équidistants A-B-C-...-G-H tels que le centre O de la section cylindrique soit au milieu du segment DE.

On détermine ensuite les positions des points A'-B'-C'- ... -G'-H' alternativement sur chaque demi-circonférence de rayon $R_1$ inférieur à $R_2$ de telle façon que la projection de A' sur l'axe XX' soit A, etc...

A'-B'-C'- ... G'-H' sont alors les centres des 8 faces réfléchissantes.

Par rapport à l'axe XX' les angles de taillage des faces ont pour expression :

$$\cos \widehat{AOA'} = \frac{AO}{R_1}, \quad \cos \widehat{BOB'} = \frac{BO}{R_1}, \quad ... \quad \cos H'OH = \frac{HO}{R_1}$$

$R_1$ est ainsi la distance des différentes faces à l'axe du cylindre.

La répartition des faces sur la périphérie est donc sinusoïdale.

On remarque la symétrie de deux faces opposées du polygone par rapport au point O. Le polygone est donc équilibré par rapport à l'axe du cylindre dans lequel il a été taillé.

On remarque aussi qu'une partie du cylindre de rayon $R_2$ n'est pas taillée. On verra ultérieurement l'utilisation que l'on peut en faire.

La figure 2 montre la disposition de l'analyseur dans laquelle le polygone P dont toutes les faces sont parallèles à l'axe 2 du cylindre tourne autour de l'axe de rotation 1, ce dernier faisant un angle $\theta$ ($\theta$ petit) avec l'axe 2.

Le polygone est calé par rapport à l'axe de rotation 1 de telle façon que les trois axes XX', 2 et 1 soient contenus dans le même plan.

Lorsque cette condition est respectée, les 8 faces du polygone ont 8 inclinaisons différentes par rapport à l'axe de rotation 1 et le pas angulaire est constant.

On démontre en effet que l'angle $\alpha$ entre l'axe de rotation 1 et la normale OA' à la face de centre A' est tel que :

$$|\cos \alpha| = \sin \theta \cos \hat{AOA'} \qquad \text{or} \quad \cos \hat{AOA'} = \frac{AO}{R_1}$$

donc

$$|\cos \alpha| = AO \frac{\sin \theta}{R_1}$$

de même

$$|\cos \beta| = BO \frac{\sin \theta}{R_1}, \quad |\cos \gamma| = CO \frac{\sin \theta}{R_1}, \text{ etc.}$$

On voit donc que les cosinus des angles $\alpha$, $\beta$, $\gamma$,... etc sont proportionnels aux segments AO, BO, CO ... etc qui ont été choisis tels que AB = BC = CD = ... = GH.

On voit aussi que les cosinus des angles $\alpha$, $\beta$, $\gamma$ sont proportionnels à $\sin \theta$.

Cette propriété permet en faisant varier $\theta$ de faire varier le pas angulaire et donc la largeur des bandes d'analyse, celles-ci étant toujours équidistantes.

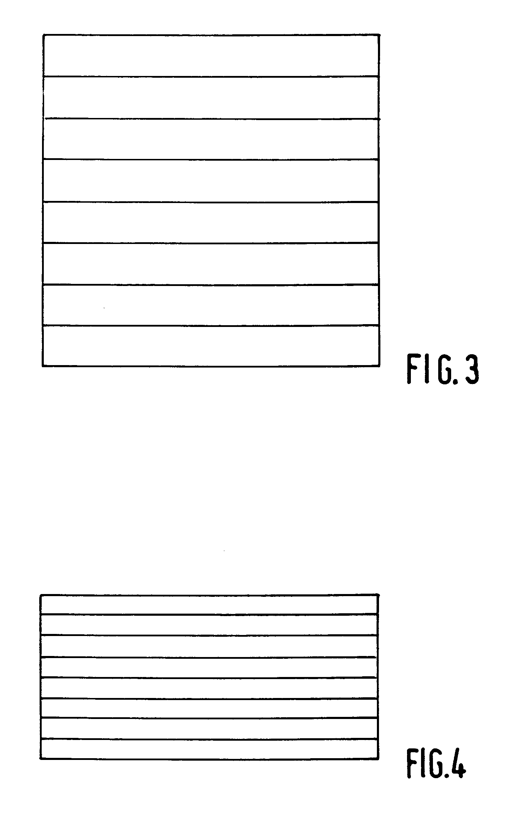

D'une façon pratique, cela signifie qu'il est possible en utilisant le même polygone monté de façon différente par rapport à l'axe de rotation, d'analyser à volonté un champ carré de 8 bandes par exemple représenté figure 3 ou bien un champ rectangulaire de format 1/2 représenté figure 4 en faisant passer l'angle d'inclinaison du polygone de $\theta$ à $\theta/2$.

La portion du cylindre de rayon $R_2$ qui subsiste après fraisage des faces planes est rendue non réfléchissante par dépôt d'un revêtement mat et absorbant. Cette surface peut avantageusement être utilisée comme référence de température qui apparaît deux fois pendant le temps de formation d'une image.

Le fait que les faces du polygone soient parallèles à l'axe du cylindre dans lequel il a été taillé permet d'empiler plusieurs cylindres sur le même axe pour effectuer simultanément le fraisage de plusieurs polygones. Il en résulte une réduction notable du coût d'usinage.

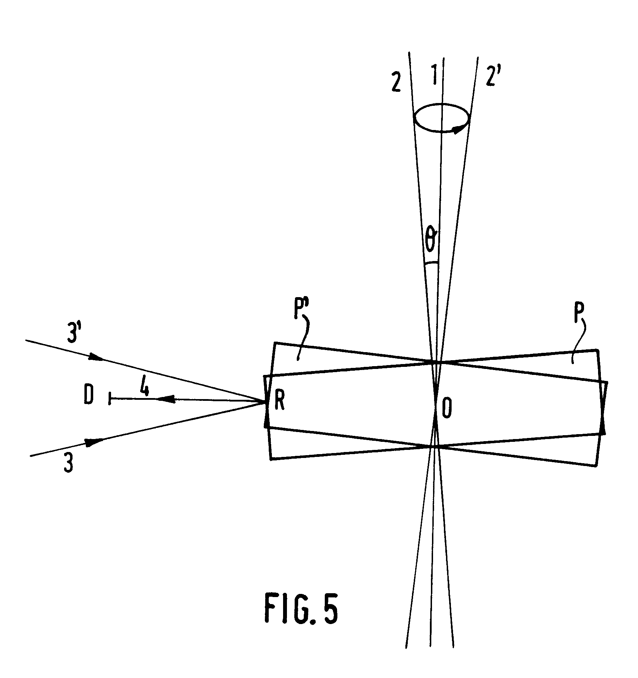

La figure 5 montre deux positions P et P' du polygone en rotation autour de l'axe 1 et correspondant respectivement aux passages successifs de l'axe du cylindre en 2 et 2' dans le plan de la figure. Les rayons lumineux incidents 3 et 3' délimitent le champ de vue de l'analyseur correspondant au balayage vertical. Ces rayons se réfléchissent au point R commun aux positions P et P' du polygone suivant le rayon 4 vers le détecteur D. On voit que l'axe 2 décrit un cône d'angle au sommet $\theta$ autour de l'axe 1.

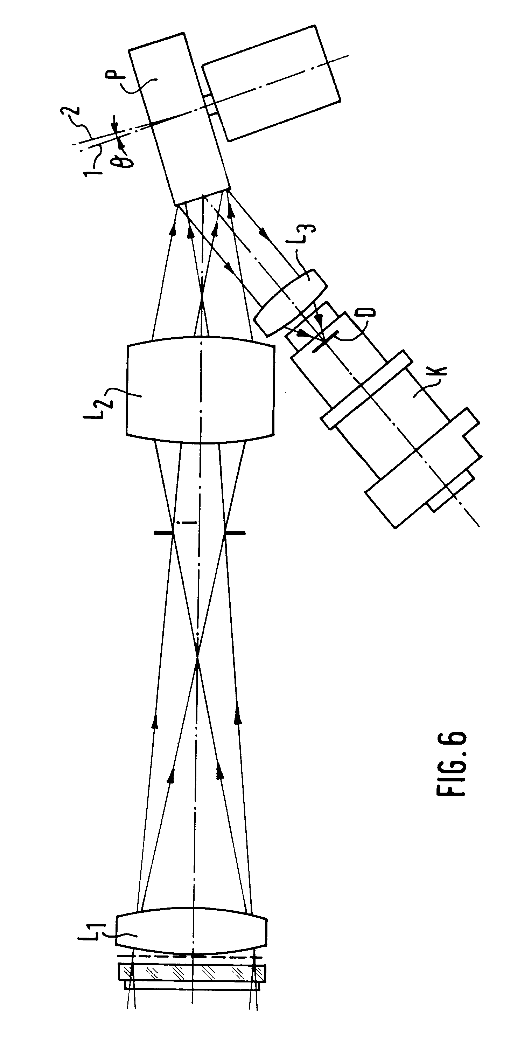

La figure 6 représente le schéma d'un mode de réalisation de l'analyseur. Le moteur M entraîne le polygone P en rotation autour de son axe 1 faisant un angle $\theta$ avec l'axe 2 du polygone.

Un système afocal constitué par les ensembles optiques $L_1$ et $L_2$ forme du paysage une image intermédiaire i. Après réflexion sur le polygone, le faisceau est focalisé au moyen de la lentille $L_3$ sur la mosaïque de détecteurs D refroidie par le dispositif cryogénique k.

## Revendications

1. Analyseur optico-mécanique n'utilisant qu'une seule pièce en rotation constituée par un polygone (P) comportant n faces réfléchissantes disposées parallèlement à l'axe du cylindre (2) dans lequel le polygone a été taillé, caractérisé en ce que lesdites faces réfléchissantes sont disposées de telle façon que leur répartition sur la périphérie soit définie comme étant sinusoïdale, c'est-à-dire telle que leurs angles de taillage (AOA', BOB', ... HOH'), par rapport à un axe diamétral (XX') particulier perpendiculaire à l'axe du cylindre, présentent des cosinus en progression arithmétique, ledit polygone tournant autour d'un axe (1) faisant un certain angle $\theta$ avec l'axe dudit cylindre (2) et étant calé par rapport audit axe de rotation de telle façon que ce dernier se trouve dans le plan formé par l'axe dudit cylindre et ledit axe diamétral (XX') de ce cylindre de part et d'autre duquel on a réparti les faces réfléchissantes parallèles deux à deux, symétriquement par rapport à l'axe du cylindre, les n faces du polygone ainsi disposé ayant n inclinaisons différentes par rapport à l'axe de rotation (1) et le pas angulaire étant constant et par suite les bandes d'analyse équidistantes.

2. Analyseur selon la revendication 1, caractérisé en ce que la variation dudit angle $\theta$ permet de faire varier le pas angulaire et donc la largeur des bandes d'analyse et d'ajuster très exactement la juxtaposition desdites bandes.

3. Analyseur selon les revendications 1 et 2, caractérisé en ce qu'il peut comporter sur sa périphérie deux zones cylindriques diamétralement opposées, rendues non réfléchissantes par dépôt d'un revêtement mat et absorbant afin d'être avantageusement utilisées comme référence de température qui apparaît deux fois pendant le temps de formation d'une image.

## Claims

1. An opto-mechanical analyser using a single rotating element constituted by a polygon (P) comprising n reflective faces arranged parallel to the axis of the cylinder (2) in which the polygon is cut, characterized in that said reflective faces are arranged in such a way that their distribution on the periphery is sinusoidal, that is to say, in such a way that their cutting angles AOA', BOB', ... HOH' have cosines in an arithmetical progression with respect to a particular diametrical axis (XX') perpendicular to the axis of the cylinder, said polygon rotating about an axis (1) extending at a given angle $\theta$ to the axis of said cylinder (2) and being fixed with respect to said axis of rotation such that the latter is in the plane formed by the axis of said cylinder and said diametrical axis (XX') of said cylinder at both sides of which the reflective faces have been distributed pairwise parallel symmetrically with respect to the axis of the cylinder, the n faces of the polygon thus arranged having n different inclinations with respect to the axis of rotation (1) and the angular pitch being constant and consequently the analysis bands being equidistant.

2. An analyser as claimed in Claim 1, characterized in that the variation of said angle $\theta$ permits of varying the angular pitch and hence the width of the analysis bands and of very exactly adjusting the juxtaposition of said bands.

3. An analyser as claimed in Claims 1 and 2, characterized in that it may have two cylindrical zones on its periphery which are diametrically opposite to each other and which are rendered non-reflective by deposition of a mat and absorbing coating so as to be advantageously utilised as a temperature reference which appears twice during the period of forming an image.

## Patentansprüche

1. Optomechanischer Analysator mit einem einzigen Rotationselement, das aus einem Polygonspiegel (P) mit n Reflexionsflächen besteht, die parallel zur Achse des Zylinders (2) angebracht sind, in dem der Polygonspiegel geformt wird, dadurch gekennzeichnet, daß die Reflexionsflächen derart angeordnet sind, daß die Verteilung auf den Umfang sinusförmig ist, d.h. ihre Formgebungswinkel AOA', BOB', ... HOH' stellen in bezug auf eine besondere diametrale Achse (XX') senkrecht zur Zylinderachse mehrere Kosinus in arithmetischer Progression dar, wobei sich der Polygonspiegel um eine Achse (1) dreht, die einen bestimmten Winkel $\vartheta$ mit der Achse des Zylinders (2) einschließt und in bezug auf die Rotationsachse derart festgesetzt ist, daß letztgenannte sich in einer Ebene befindet, die gebildet wird von der Achse des Zylinders und von der diametralen Achse (XX') dieses Zylinders, wobei auf den beiden Seiten der diametralen Achse die Reflexionsflächen je zwei und zwei parallel zueinander verteilt sind, die auf diese Weise angeordneten n Polygonspiegelflächen in bezug auf die Rotationsachse (1) n verschiedene Neigungswinkel besitzen, der Winkelschritt konstant ist und demzufolge die Analysebänder äquidistant sind.

2. Analysator nach Anspruch 1, dadurch gekennzeichnet, daß die Variation des Winkels ϑ die Möglichkeit zum Abändern des Winkelschritts und somit der Breite der Analysebänder und zum äußerst genauen Einstellen der Nebeneinandersetzung der Bänder bietet.

3. Analysator nach Anspruch 1 und 2, dadurch gekennzeichnet, daß er auf seinem Umfang zwei einander diametral gegenüberliegende Zylinderzonen besitzen kann, die durch Ablagerung eines matten und absorbierenden Überzugs nichtreflektierend gemacht werden, wodurch sie auf vorteilhafte Weise als Temperaturreferenz ausnutzbar sind, die während die Bildungszeit eines Bildes zweimal erscheint.

EP 0 293 967 B1

FIG.1

FIG.2

6

FIG. 3

FIG.4

FIG. 5

FIG.6